# EUROPEAN PATENT SPECIFICATION

(11) **EP 1 568 538 B1**
(45) Date of publication and mention of the grant of the patent: **01.06.2011**
(21) Application number: 04025885.7
(22) Date of filing: 02.11.2004
(51) Int. Cl.: B60N 2/44

(54) **Seat for motor-vehicles with deformable bottom**
Kraftfahrzeugsitz mit einem verformbaren Boden
Siège de véhicule automobile avec fond déformable.

(30) Priority: 27.02.2004 IT TO20040115
(43) Date of publication of application: 31.08.2005
(73) Proprietor: FIAT AUTO S.p.A., 10135 Torino (IT)
(72) Inventor: Giorgis, Alberto c/o Fiat Auto P&PE, Int. Property, 10135 Torino (IT); Masoero, Giorgio c/o Fiat Auto P&PE, Int. Property, 10135 Torino (IT); Pisino, Enrico c/o Fiat Auto P&PE, Int. Property, 10135 Torino (IT); Monfrino, Giovanni c/o Fiat P&PE, Int. Property, 10135 Torino (IT)
(74) Representative: Lotti, Giorgio

(56) References cited:
- DE-A- 3 521 067
- GB-A- 1 152 924
- US-A- 3 527 498
- US-A- 4 418 958
- US-A- 4 502 731
- US-A- 4 647 109
- US-A- 4 711 497
- US-A- 4 852 228
- PATENT ABSTRACTS OF JAPAN vol. 1998, no. 02, 30 January 1998 (1998-01-30) & JP 09 276090 A (IKEDA BUSSAN CO LTD), 28 October 1997 (1997-10-28)

## Description

### DESCRIPTION OF THE INVENTION

The present invention refers to a plastic seat for motor-vehicles, the bottom of the seat being able to alter its form according to the pressure of the body of the passenger. In modern motor-vehicles the size of the passenger compartment is becoming more and more important as well as lightness and low cost of components. The seats that are presently used for motor-vehicles generally present a bottom made of sheet metal slightly preshaped. In order to make the passenger feeling comfortable, a thick layer of adequately shaped foam is added to the sheet metal so that it can take up any pressures the passenger puts on the seat. WO 9958363 shows a seat with the features of the preamble of claim 1. It is an object of the present invention to provide a seat the horizontal part of which can be comfortable and elastic but, at the same time, be reduced in size and lighter.

It is a further object of the invention to lower the amount of foam used for each seat so that production costs can be lower. These and further purposes are achieved by the present invention the object of which is a seat for motor-vehicles presenting the characteristics set forth in claim 1.

Further characteristics and advantages will appear clearly from the following description provided as non restrictive example and referring to the appended drawings, in which:
figure 1 is a perspective transparent view of the horizontal part of the seat for motor-vehicles according to the present invention;
figure 2 is a top view of the horizontal part of the seat in figure 1, and
figures 3 to 6 are cross sections of the bottom of the seat in figure 1, more precisely:

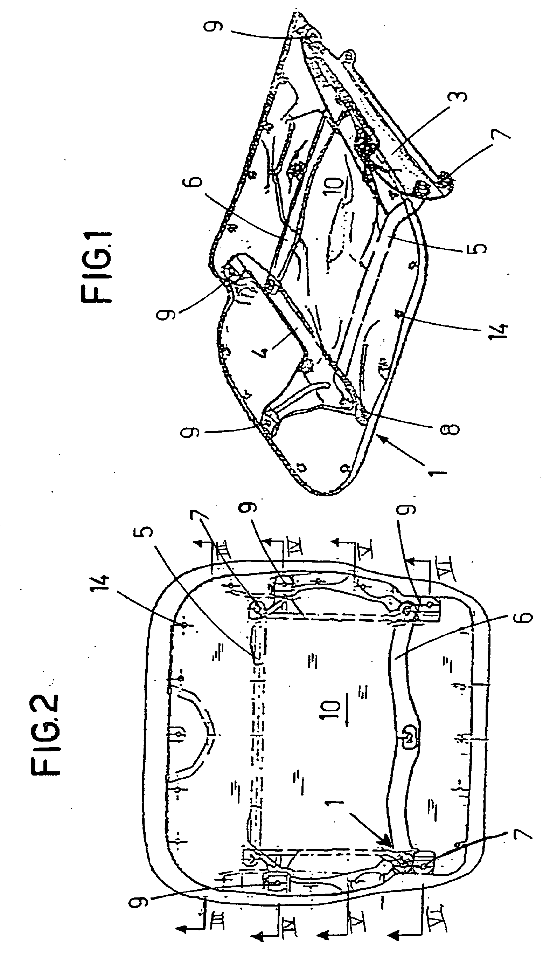

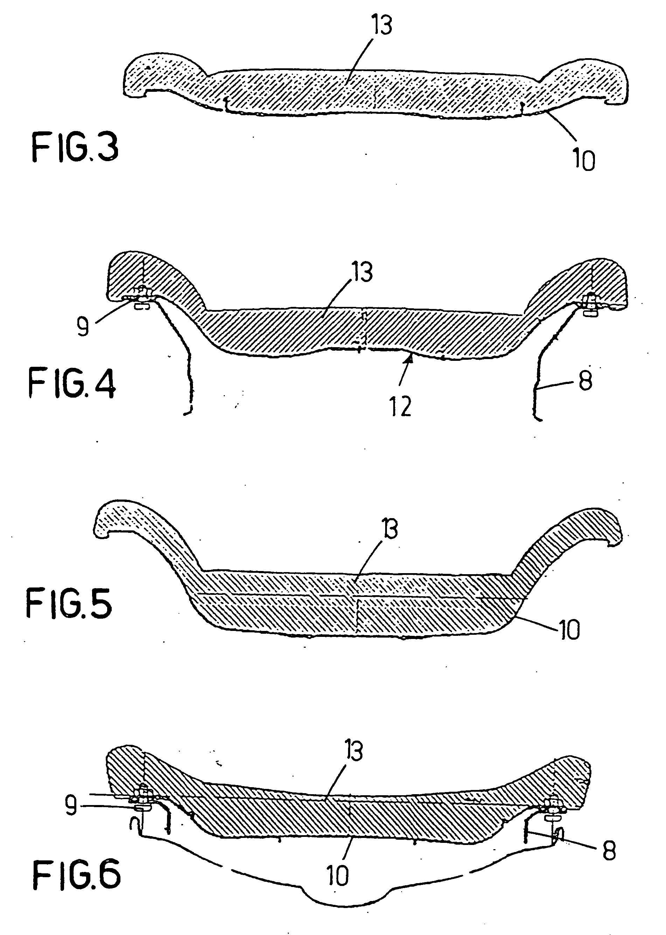

figure 3 is a section view of the horizontal part of the seat along line III-III in figure 2;
figure 4 is a section view of the horizontal part of the seat along line IV-IV in figure 2;
figure 5 is a section view of the horizontal part of the seat along line V-V in figure 2 and
figure 6 is a section view of the horizontal part of the seat along line VI-VI in figure 2, the size of the horizontal part of a seat according to the known art being indicated.

With reference to the figures, reference number 1 indicates the lower frame of the seat of a motor-vehicle, consisting of two supports 3 and 4 connected between them by means of two shaped front and rear cross members 5 and 6. The supports present in their lower part the attachments 7 for the sliding blocks (not shown) for the guides of the seats 8 and, in their upper part, two attachments 9 each for the bottom of the seat. The attachments consist of common mechanical fasteners. The bottom 10, according to the invention, is preferably made of thermoplastic material of the PA6 type. However, it can be made also of generic plastic materials, within the scope of the present invention. The thickness of the bottom is varying between 0.5 mm and 3.5 mm, according to the different parts of it. In other words, in the area corresponding to the buttocks and the upper part of the thigh of the seated driver, the thickness is between 0.5 mm and 1.2 mm, while in the peripheral area of the bottom, and more precisely around its points of attachment, the thickness is between 3 mm and 3.5 mm.

The points of attachment 9 will be advantageously located at the corners of a rectangle surrounding the part of the horizontal part that the weight of the passenger stresses more. In order to get a more elastic bottom capable of better take up the impacts while the motor-vehicle is moving, its central part, which is not directly stressed by the weigh of the passenger, presents a curve 12 facing upwards. On the bottom made in this way, a layer of polyurethane foam 13 is then placed and due to the elasticity of the plastic bottom, this layer will be less thick than the one generally used with sheet metal bottoms. Its thickness will basically be between 25 mm and 35 mm according with the use of the seat. In the case of a very comfortable sedan the thickness will be maximum while in case of a sports car the thickness will be the minimum one. The thickness in the side parts can be even 50/60 mm, without going beyond the scope or the invention.

The lift of the foam can be also taken into account so that there will be values between 37 and 42 daN. However, the horizontal part can be made even of common foams, that is with different lifts, without reducing comfort for passengers. The bottom 10 can be provided with aeration holes otherwise intended to eliminate the air inside the foam.

It is to be understood that the invention is not limited to the embodiments here described and shown, which are here provided as non restrictive example since their form, the location of components and the construction and assembling details can be varied without going beyond the scope of the invention.

## Claims

1. A seat for motor vehicles consisting of a horizontal part and a back mutually articulated, said horizontal part, consisting of a bottom (12) and a pad (13), being supported by a frame (1) which is adapted to rest on guides (8) fixed to the bodywork of the motor vehicle,
the bottom (12) of the horizontal part of the seat is made of plastic material, wherein
- the bottom is connected to the support frame (1) at four points (9) basically located at the corners of a rectangle, and
- the seat is curved upwards (12) in its central part
**characterized in that**
- the thickness of the bottom is varying between 0.5 mm and 3.5 mm, according to the different parts of it,
- the thickness of the bottom in the area corresponding to the buttocks and the upper part of the thigh of the seated driver, is between 0.5 mm and 1.2 mm, while the thickness of the bottom in the peripheral area of the bottom, and more precisely around its points of attachment, is between 3 mm and 3.5 mm.

2. A seat for motor vehicles as claimed in claim 1 **characterised in that** the thickness of the bottom is basically maximum at the points (9) where it is connected to the frame (1) and around them.

3. A seat for motor vehicles as claimed in claim 1, **characterised in that** the thickness of the plastic bottom is basically at its minimum at the points where the passenger makes the maximum pressure.

4. A seat for motor vehicles as claimed in claim 1 **characterised in that** the pad consists basically of polyurethane foam the thickness of which varies between 25 and 35 mm.

5. A seat for motor vehicles as claimed in claim 1, **characterised in that** the pad consists basically of polyurethane foam the lift of which varies between 37 and 42 daN.

## Patentansprüche

1. Sitz für Kraftfahrzeuge, der aus einem horizontalen Teil und einer Rückenlehne besteht, die durch Gelenke miteinander verbunden sind, wobei das horizontale Teil, das aus einem Boden (12) und einem Polster (13) besteht, durch einen Rahmen (1) gehaltert wird, der dazu ausgebildet ist, auf Führungen (8) aufzuliegen, die an der Karosserie des Kraftfahrzeuges befestigt sind,
wobei der Boden (12) des horizontalen Teils des Sitzes aus Kunststoffmaterial hergestellt ist, und
- der Boden mit dem Tragrahmen (1) an vier Punkten (9) verbunden ist, die grundsätzlich in den Ecken eines Rechteckes angeordnet sind, und
- der Sitz in seinem zentralen Teil nach oben (12) gekrümmt ist,
**dadurch gekennzeichnet, dass**
- die Dicke des Bodens zwischen 0,5 mm und 3,5 mm variiert, bei seinen unterschiedlichen Teilen,
- die Dicke des Bodens in dem Bereich entsprechend dem Gesäß und dem oberen Teil des Oberschenkels des im Sitz befindlichen Fahrers zwischen 0,5 mm und 1,2 mm liegt, während die Dicke des Bodens in dem Umfangsbereich des Bodens, und genauer gesagt, um dessen Befestigungspunkte herum, zwischen 3 mm und 3,5 mm liegt.

2. Sitz für Kraftfahrzeuge nach Anspruch 1, **dadurch gekennzeichnet, dass** die Dicke des Bodens grundsätzlich minimal an den Punkten (9) ist, an welchen er mit dem Rahmen (1) verbunden ist, und um diese herum.

3. Sitz für Kraftfahrzeuge nach Anspruch 1, **dadurch gekennzeichnet, dass** die Dicke des Kunststoffbodens grundsätzlich minimal an den Punkten ist, an welchen der Passagier den maximalen Druck hervorruft.

4. Sitz für Kraftfahrzeuge nach Anspruch 1, **dadurch gekennzeichnet, dass** das Polster grundsätzlich aus Polyurethanschaum besteht, dessen Dicke zwischen 25 und 35 mm variiert.

5. Sitz für Kraftfahrzeuge nach Anspruch 1, **dadurch gekennzeichnet, dass** das Polster grundsätzlich aus Polyurethanschaum besteht, dessen Hebekraft zwischen 37 und 42 daN variiert.

## Revendications

1. Siège destiné à des véhicules à moteur, constitué d'une partie horizontale et d'un dossier mutuellement articulés, ladite partie horizontale, constituée d'un fond (12) et d'un coussin (13), étant supportée par une ossature (1) qui est conçue pour reposer sur des guides (8) fixés au châssis du véhicule à moteur,
le fond (12) de la partie horizontale du siège est constitué d'une matière plastique, dans lequel
- le fond est raccordé à l'ossature de support (1) au niveau de quatre points (9) situés principalement aux coins d'un rectangle, et
- le siège est incurvé vers le haut (12) dans sa partie centrale
**caractérisé en ce que**
- l'épaisseur du fond varie entre 0,5 mm et 3,5 mm, en fonction des différentes parties de celui-ci,
- l'épaisseur du fond dans la zone correspondant aux fesses et la partie supérieure de la cuisse du conducteur assis, se situe entre 0,5 mm et 1,2 mm, alors que l'épaisseur du fond dans la zone périphérique du fond, et plus précisément autour de ses points d'attache, se situe entre 3 mm et 3,5 mm.

2. Siège destiné à des véhicules à moteur selon la revendication 1, **caractérisé en ce que** l'épaisseur du fond est principalement maximale au niveau des points (9) où il est raccordé à l'ossature (1) et autour d'eux.

3. Siège destiné à des véhicules à moteur selon la revendication 1, **caractérisé en ce que** l'épaisseur du fond en matière plastique se trouve principalement à son minimum au niveau des points où le passager applique la pression maximale.

4. Siège destiné à des véhicules à moteur selon la revendication 1, **caractérisé en ce que** le coussin est constitué principalement d'une mousse de polyuréthane dont l'épaisseur varie entre 25 et 35 mm.

5. Siège destiné à des véhicules à moteur selon la revendication 1, **caractérisé en ce que** le coussin est constitué principalement d'une mousse de polyuréthane permettant une poussée qui varie entre 37 et 42 daN.
